# EUROPEAN PATENT APPLICATION

(11) **EP 0 807 385 A2**
(43) Date of publication of application: **19.11.1997**
(21) Application number: 97201296.7
(22) Date of filing: 29.04.1997
(51) Int. Cl.: A23C 13/14, A23L 1/19, A23C 9/13

(54) **Acid stable pourable alternative creams**

(30) Priority: 15.05.1996 EP 96201320
(71) Applicant: UNILEVER N.V., 3000 DK Rotterdam (NL); UNILEVER PLC, London EC4P 4BQ (GB)
(72) Inventor: van den Heuvel, Wilhelmus M.J.G., Unilever Res., 3133 AT Vlaardingen (NL); Paardekooper, Robert H., Unilever Res., 3133 AT Vlaardingen (NL)
(74) Representative: Sikken, Antonius H. J. M.

(57) **Abstract**

Whey protein based alternative cream having a fat level in the range of 0-35%, characterised in that the cream is pourable, is stable at a pH in the range of 3.5 to 4.5, heat stable, and has a good shelf life stability.

## Description

The present invention pertains to whey protein based alternative creams having a fat level equal or below to 35%.

In US Patent no 3,944,960, aqueous oil emulsions which can be whipped and heat treated are described, the product comprising globular protein in substantial absence of coagulated protein. In this document, it is described to improve the heat stability of whey protein and other globular proteins by complexing it with an anionic polysaccharide. Examples mentioned are carrageenan, sodium alginate and CMC. It is menioned in the document that it is highly preferable to have most of the globular protein in the form of a complex with an anionic polysaccharide to improve the taste of the product when a pasteurisation step is applied.

The present invention aims at pourable, acid stable, sour cream products which are also heat stable and which have a good shelf life stability at both room temperature, i.e. about 20°C and at refrigerator temperatures, i.e. about 5°C. Pourable creams of low fat level that do not flocculate at low pH are not known yet, and are in particular highly desired in food service, in which both quality of the food, and convenience for use are required. Further advantages of the presently found acid stable creams also for use by the consumer are that these can be applied for pouring, that these can, optionally, be whipped if so desired, and that the cream does not flocculate at pH between 4.5 and 3.5.

The present invention concerns a whey protein based alternative cream having a fat level in the range of 0-35%, characterised in that the cream is pourable, is stable at a pH in the range of 3.5 to 4.5, heat stable, and has a good shelf life stability.

Pourable means that the cream product is a liquid (rather than a powder) and that it can be removed from its container by holding the container upside down without having to use any force. Suitably, the cream will have a viscosity in the range of 1-750 mPa.s when measured with a Haake viscosimeter type VT02, measured with head No.3, in measure beaker No.3 at a temperature of 5°C, measured after 20 seconds, rotation speed being 62.5 rovations per minute (rpm). The measurement is to be carried out 3 days after preparation of the cream. Preferably, the viscosity is in the range of 200-300 mPa.s.

Heat stable means that the product is stable upon a heat treatment of at least 85°C for 15 seconds, preferably boiling temperature for 15 seconds. This heat treatment is generally referred to as mild UHT treatment or high temperature short time pasteurization.

For the purpose of the invention the term shelf life stability of the product refers to the microbiological stability of the product and/or the physical stability of the product during normal storage times and temperature. The normal storage time for the product of the invention is preferably at least 2 months. Applicants have found that the product according to the invention can be stable for a storage time up to a year.

The physical stability of the cream can be determined visually and by determination of the viscosity. A cream is considered not stable if the product is not pourable and/or, on visual inspection, shows that lumps have been formed and/or shows phase separation. In particular, stability determined through pourability can be determined by application of the above indicated method, which means that the cream is not stable if it has a viscosity of more than 750 mPa.s measured at the conditions indicated above for stability at 5°C or measured after storage at 20°C, depending on whether storage stability is determined at fridge or room temperature.

The cream is preferably microbiologically stable for at least 2 weeks, more preferably at least 6 weeks, most preferably for at least 9 weeks when stored at 5 °C or 20 °C.

The cream is preferably physically stable for at least 2 weeks, more preferably at least 6 weeks, most preferably for at least 9 weeks when stored at 5 °C or 20 °C.

In one embodiment the acid stable cream itself is not acidic but it is stable at a pH in the range of < 3.5 - 4.5. Such creams preferably have a pH of 6 or higher. In another particular embodiment, the present invention provides a cream of which the aqueous phase has a pH in the range of 5.5 to 3, preferably of 5.3 - 3.2, and further preferred a pH in the range of 5.0 - 3.5. The fat level of the cream is in the range of 0-35% based on the total composition, and the cream will contain about 1.5 to 8% based on the total composition, of a whey protein. In a preferred embodiment, the cream contains about 3 to 6% of whey protein (calculated as dry matter), with a further preference for 4 to 5wt%.

In the cream of the invention, some flocculated protein can be present if added in flocculated form. For example, yoghurt can be added up to 20-25 wt% on the total formulation, preferably after a pre-emulsion is made of the fat with whey-protein, and yoghurt normally contains flocculated protein.

The cream should preferably be substantially free of any proteins that can flocculate upon the storage, heating or use of the cream. Thus, the cream is preferably substantially free of any protein other than whey protein, and has a fat content in the range of 0-35% based on the total composition. For the present invention, gelatin is not considered a protein as referred to in this specification.

The proteins that can be applied are whey protein, whey protein concentrate, whey protein powder, or similar whey containing products.
In the cream composition containing any fat, a non-protein emulsifier is to be used which is suitable for making pourable creams in the presence of whey protein. It was found that the emulsifier systems are to be carefully selected. Very suitable emulsifiers were found in the group of emulsifiers based on lactic esters, unsaturated monoglycerides, saturated monoglycerides, glycerol esters, emulsifiers based on DATA esters, and/or on lecithin, Tween™ (which is a polyoxyethylene sorbitan ester), polyglycerol ester, lactic esters of mono-diglyceride, unsaturated diglycerides, distilled mono-diglyceride, saturated mono-diglyceride, egg ingredients (e.g. egg-yolk) or mixtures thereof. The combination is suitably selected from this list. The specific combinations and amounts to be used will depend on the ingredients of the cream to be applied. If no fat is present, no emulsifier other than the whey protein itself needs to be present.
Whey proteins can create a stable cream alternative emulsion at 5° and 20°C when added in a concentration of 2-5%, preferably of 4.5 to 3%, in particular when applied in combination with an emulsifier.

All percentages mentioned in this application are percentages by weight, unless indicated otherwise.

The fat level of the acidified cream can be in the range of 0 to 35 weight percent, and is preferably in the range of 5 to 30%, even further preferred in the range of 15-25%. The presently found products have been found to be stable upon heating, but also when applied at acidic pH and even at environment of high temperature and pH in the range of 3.5-4.5. Accordingly, the presently found acidified creams allow the use of a sour cream of low fat level in, for example, a tomato soup, in fruit puree, yoghurt or yoghurt comprising desserts, and the like.

Depending on the type of fat used, the sour cream can be whippable or not. If a hard fat is used, a whippable cream will often be obtained, whereas the use of a soft or liquid fat does in general not result in a whippable cream. As fat, almost any type of fat, including vegetable fat which is hard, soft or even liquid, or mixtures thereof, animal fat, with a preference for milk fat, can be used. In this application, the terms fat and oil are used interchangeably.

Preferably the cream is whippable and retains its shape upon storage for 16 hours at 5 °C. A mousse type structure can be achieved by post-hardening of the emulsion after whipping. This can be tested bij measuring the Stevens value at 5 °C after whipping the cream. The Stevens value at 5 °C after 3 hours, preferably after 16 hours, is preferably more than 20 g.

As a source for acidifying the cream, well known acidifying agents can be applied. Examples for acidifying the aqueous phase of the cream are lactic acid or GDL (glucano delta lacton), yoghurt, and yoghurt cultures.
Of course, preferences can be identified on the basis of taste, costs, availability, and the like. Preferably, the use of citric acid is avoided.

Optionally, the product can contain stabilisers such as locust bean gum, guar, gelatin, starches, and the like.

The presently found creams can be used in desserts, as a whippable cream, as a cream with extended open shelf life, as pourable creme fraiche product, as creams stable in acidic environment, and the like.

The creams of the present invention can be prepared in any method suitable thereto. In one suitable embodiment, all powders are dissolved in water, other components like the flavours are added; thereto, the liquid fat is added and the fat and water phase are blended (for example, with a Silverson mixer or a Turrax), the acidic ingredients are added (for example, lactic acid and/or yoghurt), the mix is blended and then (indirectly) heated to pasteurisation temperature and kept at this temperature for a sufficient time to pasteurize, (e.g.85 °C for 15 seconds), then cooled down. Suitably, the products are aseptically filled and stored chilled or at ambient temperature.
During the above described process the products are preferably pasteurized and subsequently cooled down in line, followed by aseptical packaging. Applicants have found that in order to obtain a good stability it is sometimes desirable to perform the pasteurization in line. By operating this way the development of an off flavour comprising a cooked milk flavour is prevented. By packing the products aseptically, the microbiological stability can be ensured.

The invention will be further illustrated by the following examples.
Ingredients and amounts are as indicated in the Examples The process for preparing was as follows, unless indicated otherwise.

### Water phase:

* Heat water to 70°C
* Add WPC, sugar, gums (Guar, LBG, gelatin)
* Optionally add stabilised Egg-yolk
* Ultra turrax for 4 minutes

### Oil-phase:

* Heat oils to 70°C
* Add emulsifiers and stir together with a blade stirrer for 5 minutes

### Total:

* Add oil phase to aqueous phase
* Ultra Turrax for 2 minutes
* Add fresh yoghurt of 40°C (if required)
* Ultra Turrax for 2 minutes
* Adjust pH with Lactic Acid
* Temperature=55°C

### Processing conditions applied:

* Pre-heat to 70°C
* Direct steam injection to 90°C
* Holding 5 seconds
* Flash cool at 38 bar
* Homogenisation: 50-150 Bar (1 step)
* Cool to 5°C
* Fill aseptically in sterile glass jars

### Storage:

* Store at 5 or 20°C, as indicated in the Examples.

Throughout the Examples, abbreviations are used, having the meaning as listed below:
- WP: = Whey protein
- Cas: = Caseinate
- BMP: = Butter Milk Powder
- WPC: = Whey Protein Concentrate (80%)
- LE: = Lactic Ester of Monodiglyceride
- UMG: = Unsaturated Monodiglyceride or distilled Monoglyceride
- SMG: = Saturated Mono-diglyceride or distilled monoglyceride
- DATA: = based on DATA ester of Monodiglyceride
- LEC: = Lecithin
- Tween: = polyoxyethylene sorbitan ester
- PGE: = polyglycerol ester

### Example I

4 commercial products were obtained and analysed for their fat and protein content. These products were compared to a product of the invention, and was a product prepared as described for Example IV C.

### Measurements:

The viscosity of example ID was measured with Brookfield, type RV and spindle RV5.
The viscosity of all other samples was measured with a Brookfield, type RV and spindle CP52, shear rate = 1/s. Viscosity was measured after 5 seconds, at 30°C.
Viscosities of products prepared following the standard procedure at our lab were compared to commercial samples.

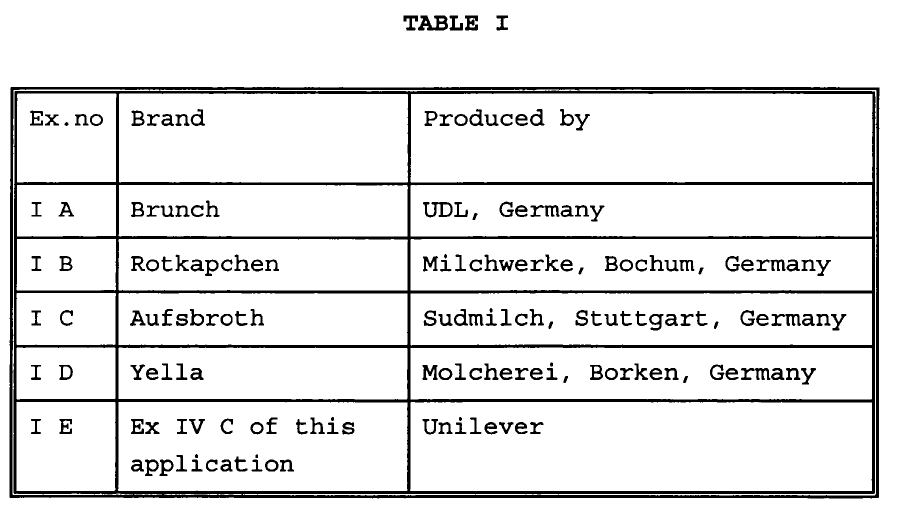

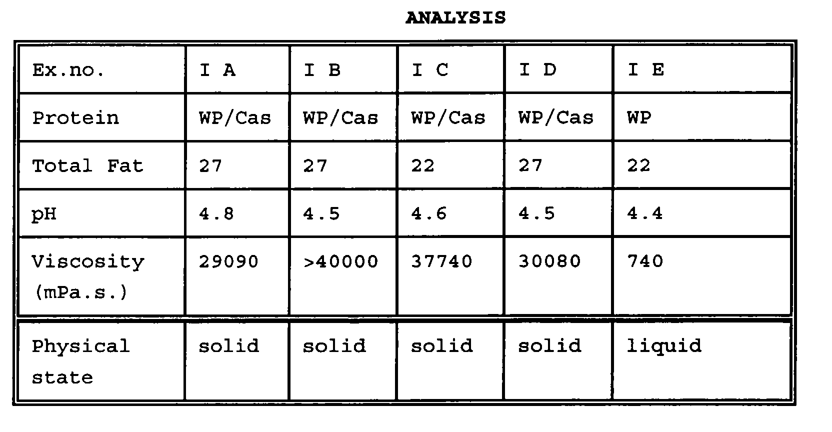

Sample I E is according to the invention, IA-ID are comparative examples.

From the results we can conclude that the viscosities of the emulsions with only WPC as protein source are significantly lower than commercial products, which reflects itself in the fact that products made according to the invention are still pourable.

### Example II

4 creams were formed using the general procedure as indicated above. The products were prepared using different proteins as indicated in Table II. The creams were formed from 20% vegetable fat of which 15% hardstock (15 %PK39, 5% CN), 0.47% emsulifiers (PGE/DATA), protein (type and amount as indicated in Table II), stabilised egg yolk (1.0%) granulated sugar (for Examples II A, B and D: 10%, for Example IIC: 8%), thickeners (guar 0.04%, LBG 0.02%, gelatin 0.1%), 22% yoghurt, and lactic acid to pH as in Table II, balance to 100% water.

Measurements were carried out as follows:

### Whiptest:

* Add 500 grams cream (5°C) in the 5 litre bowl of Hobart N50 with wire whisk
* Whip at medium speed till texture is visually right.

### Viscosity:

Haake viscosimeter type VT02, measure head No3, measure beaker no3.
Temperature=5°C
Measured viscosity after 20 seconds rpm=62.5

### Specific Volume(SV):

Measure density of unwhipped and optimally whipped cream.
S.V.=(ml whipped cream/g whipped cream)

### Hardness:

Stevens Texture analyses model LFRA
Cylinder head: 1 inch cylindrical perspex head
cuplet=75 mm diameter and 40 mm dept
Penetration depth=4mm
Penetration speed=0.5 mm/sec
Value=Grams

### Stability:

* Stable:
   - Visually no lumps after storage time at certain temperature
   - product remains pourable during storage
   - no phase separation visible during storage
* Unstable: Lumps visible or completely solid in pack or phase separation visible after storage time at certain temperature.

**TABLE II**

| Ex.no | II A | II B | II C | II D |
|---|---|---|---|---|
| Protein 1 amount(%) | BMP 4 | WPC 4,5 | Soyprotein 2 | WPC 2 |
| Protein 2 amount(%) | | | | BMP 2 |
| emulsifier type total amount (%) | A* 0.47 | B* 0.4 | B* 0.4 | B* 0.4 |
| pH | 4.37 | 4.25 | 4.06 | 4.28 |
| Viscosity (mPa.s/5 °C) | ND | 170 | ND | 190 |
| Whiptime (sec) | 420 | 330 | 300 | 180 |
| SV (ml/g) | 3.63 | 2.38 | 3.21 | 2.69 |
| Stevens value (5 °C) (g) | 16 | 63 | 18 | 59 |

| Stability (wks) | | | | |
|---|---|---|---|---|
| (5 °C) | No (0) | Yes (2) | No (0) | No (0) |
| (20 °C) | No (0) | Yes (2) | No (0) | No (0) |

| | | | | |
|---|---|---|---|---|
| *emulsifiers used: A: PGE/DATA B: LA/SMG/Lec | | | | |

From the results we can conclude that emulsions containing caseins (in BMP) and soyprotein are unstable at 5-20°C. Emulsions with only whey proteins were found to be stable. The firmness as shown by the Stevens value of the whipped emulsion is high when WPC is used, whereas the firmness of the whipped emulsions not comprising WPC were found to be unacceptably low.

### Example III

4 products witing the scope of the present invention were prepared, with variations of amounts and type of ingredients used.

For product IIIA, the formulation was based on 18% vegetable fat of which 9% hardstock, 0.38% emulsifiers (LA/SMG/Lec), WPC (4.5%), 1.8% stabilised egg yolk, 7% granulated sugar, 10% strawberry puree, thickeners (guar 0.04%, LBG 0.02%, gelatin 0.1%), 12% yoghurt and lactic acid to pH=4.1, balance to 100% water.

For product IIIB, the formulation was based on 20% vegetable fat of which 8% hardstock, 0.47% emulsifiers (LA/SMG/UMG/Lec), WPC (4.5%), 1.8% stabilised egg yolk, 7% granulated sugar, thickeners (guar 0.04%, LBG 0.02%, gelatin 0.1%), 22% yoghurt and lactic acid to pH=4.1, balance to 100% water.

For product IIIC, the formulation was based on 18% vegetable fat of which 9% hardstock, 0.52% emulsifiers (PGE/UMG/Lec), WPC (4.5%), 11% granulated sugar, thickeners (guar 0.04%, LBG 0.02%, Avicel 0.1%), 3.3% yoghurt powder and lactic acid to pH=4.1, balance to 100% water.

For product IIID, the formulation was based on 18% vegetable fat of which 9% hardstock, 0.42% emulsifiers (PGE/Lec), WPC (4.75%), 10% granulated sugar, thickeners (guar 0.04%, LBG 0.02%, Avicel 0.15%, gelatin 0.1%), 20% strawberry puree, 1% yoghurt powder and lactic acid to pH=4.1, balance to 100% water.

For the analysis, conditions were used as indicated in Example II. Analysis results are provided in Table III

**TABLE III**

| Trial | IIIA | IIIB | IIIC | IIID |
|---|---|---|---|---|
| Viscosity (mPa.s) | 180 | 180 | 180 | 280 |
| whip-time (min) | 7 | 7 | 5 | 5 |
| S.V. | 2.5 | 2.8 | 2.8 | 2.3 |
| Stability (wks) 5°C | yes (>26) | yes (>26) | yes (>26) | yes (>26) |
| Stability (wks) 20°C | yes (>4) | yes (>4) | yes (>26) | yes (>26) |

The emulsions of the invention were very well pourable, had a high SV and a mousse type of structure after whipping and subsequent 2 hours of storage. Typical hardness values for all samples are a Stevens value at 5 °C of 20-30 g directly after whipping in a Hobart 120 and 60-150 g after 3 hours storage at 5 °C. All products were found to have a long closed microbial and physical shelf life.

### EXAMPLE IV

3 Products of a composition as described hereunder were prepared.
For all Example IV A, B and C, a cream was formed using the general procedure as indicated above. The formulation was based on an amount of vegetable fat as indicated in the table (of which 40% of the fat was hardstock), 0.47% emsulifiers (PGE/DATA), WPC (4.5%), stabilised egg yolk (1.8%) granulated sugar (10%), thickeners (guar 0.04%, LBG 0.02%, gelatin 0.1%) and lactic acid to pH=4.4, balance to 100% water.
The analysis was performed using the conditions as indicated in Example II. Analysis results are found in Table IV.

**TABLE IV**

| Trial | Fat (%) | Stability(wks) | |
|---|---|---|---|
| | | 5°C | 20°C |
| IV A | 5 | Yes(>3wks) | Yes(>3wks) |
| IV B | 10 | Yes(>3wks) | Yes(>3wks) |
| IV C | 20 | Yes(>3wks) | Yes(>3wks) |

The products were all found to be stable for more than 3 weeks at both 5 and 20°C. After 3.5 weeks, the experiment was terminated.

### Example V

Two compositions were prepared using the general procedure as indicated above. The formulations were based on 20% vegetable fat (of which 8% hardstock), 0.47% emsulifiers (PGE/DATA), WPC (4.5%), stabilised egg yolk (1.8%) granulated sugar (10%), thickeners (guar 0.04%, LBG 0.02%, gelatin 0.1%), yoghurt (Example VA: 22%, Example VB: no yoghurt), and lactic acid to pH=4., balance to 100% water. Analysis results are found in Table V.

**TABLE V**

| Trial | Acidulant | Stable(wks) | |
|---|---|---|---|
| | | 5°C | 20°C |
| VA | Yoghurt+LA | Yes(>3wks) | Yes(>3wks) |
| VB | LA | Yes(>3wks) | Yes(>3wks) |

### EXAMPLE VI

Two tests were carried out:
A) Adding acidic fruit puree basis to the cream
B) Adding cream to acidic tomato soup and check for flocculation

### VI A Trials with Acid fruit puree

### VIA.1: Fruit puree is added after pasteurization of the cream

### Ingredients:

* Creams made as described under Example VIC
* Puree=Strawberry puree, pH=3.9

### Procedure:

* Post whip: Adding puree to whipped cream and whip basis together for a short while
* Pre-whip: Adding puree to unwhipped cream and whip together till structure is visually okay
* Blanc: WPC based cream with no puree added

### Remarks:

Mix time = time needed to mix in puree after adding to whipped cream
ND = Not determined

**TABLE VIA.1**

| Sample | Post-whipped | Pre-whipped | Blanc |
|---|---|---|---|
| Whiptime (min.sec) | 5 | 5 | 3.3 |
| Mix time | 0.3 | 0 | 0 |
| SV | 2.11 | 2.22 | 2.8 |
| Stevens (g) (0hr) | 28 | 27 | 34 |
| Stevens (g) (16hr) | 179 | 149 | ND |
| Texture (after 16 hr/5°C) | Excellent open texture | Excellent open texture | Excellent open texture |

The creams of the present invention are suitable for their application in acidic fruit purees, e.g. to obtain a fruit mousse of excellent texture.

### VIA.2: Fruit puree added to the sour cream prior to pasteurization

### Procedure:

* Make premix as described for VIA.1
* Add fruit puree
* Process as described for VIA.1

The formulations of the products are as follows:

| Sample | VIA2 | VIA3: |
|---|---|---|
| Vegetable oil: | 18% | 18% |
| Emulsifiers: | 0.44% based on PGE/LEC | 0.44% based on PGE/LEC |
| WPC | 4.75% | 4.75% |
| Sugar: | 10% | 10% |
| Thickeners | 0.2% | 0.2% |
| *yoghurt powder: | 3% | 1% |
| strawberry puree | 0% | 20% |
| *Colours and flavours | yes | yes |
| lactic acid | to pH=4.1 | to pH=4.1 |

| | | |
|---|---|---|
| analysis: *samples whipped in Hobart and stored for 0 or 3 hours at 5°C | | |

**TABLE VIA.2**

| Sample | Whiptime (min) | SV | viscosity (mPas) | Hardness Stevens value (t=0) | Hardness Stevens value (t=3hr) |
|---|---|---|---|---|---|
| (VIA2) | 5 | 2.4 | 480 | 31 | 111 |
| (VIA3) | 4 | 2.6 | 330 | 33 | 76 |

These trials show that also acidic ingredients (fruit puree etc.) can be added to the sour cream before pasteurisation. Products with a good viscosity, a good SV and a good mousse type of structure after whipping and storage are gained. All products have a long (>6 months) closed shelf life both microbiologically and physically (stable emulsion).

### VI B) Adding cream to acid tomato soup

### Procedure:

* Take 200 gram Knorr tomato soup
* Boil soup
* Add 60 grams cream
* Reboil and stirr and continue boiling for 15 seconds
* Pour cream onto glass dish and evaluate visually on flocculation, binding properties

### Samples:

* Commercial: caseinate based Cream Alternative based on caseinate and vegetable fat (28%), pH=7
* Neutral: 4.5% WPC based Cream, 28% Fat, Neutral pH
* Yoghurt: 4.5% WPC based cream, 10% Fat, pH-4.3, 22% yoghurt
* LA: 4.5% WPC based cream, 20% Fat=4.2, No yoghurt added only Lactic Acid

| Samples | Flocculation | Binding properties |
|---|---|---|
| Commercial | Severe flocculation | Poor |
| Neutral | No flocculation | Excellent |
| Yoghurt | No flocculation | Excellent |
| LA | No flocculation | Excellent |

This shows that for different compositions the cream of the invention is highly suitable for use in an acidic environment.

### Comparative Examples

The procedures for the comparative examples C1-C6 were as follows:

### Procedure A:

A complex was prepared of sodium alginate and whey protein.
0.2% sodium alginate was added to cheese whey adjusted with caustic soda to a pH of 9 and dissolved while stirring for 15 minutes. Subsequently the pH was decreased to 3.0 by addition of hydrochloric acid. The precipitated complex was isolated by centrifugation.

### Procedure B:

Butterfat (15%) was mixed with 0.95% saturated monoglyceride and 0.05% unsaturated monoglyceride and 0.1% lecithin; the percentages are by weight of the emulsion. Sugar was added in an amount of 10% by weight of the emulsion to an aqueous phase containing whey protein (1.6%). 65% of the whey protein had been complexed to sodium alginate, following procedure A. The aqueous phase had a pH of 4.8. The fat phase (16.1%) and the aqueous phase (83.9%) were heated to 65-70 C, mixed and homogenized at 75 and 50 kg/cm², and the emulsion was filled into bottles which were sealed and pasteurized for 10 minutes at 90 C in such a way that the content was moving with respect to the bottle.

### Procedure C:

Procedure as in B but after mixing the fat phase and the aqueous phase, the mixture was pasteurized in line with a mild UHT process (steam injection to 90° C and flashcooling). The mixture was homogenized, followed by cooling in line and aseptically packaging to ensure the microbiological stability. Pasteurization in the bottles was left out.

### Comparative example 1 (C1):

Procedure B was followed.

### Comparative example 2 (C2):

Procedure C was followed.

### Comparative example 3 (C3):

The procedure of example C1 was followed except that no whey protein was complexed.

### Comparative example 4 (C4):

The procedure of example C2 was followed except that the whey protein was not complexed.

### Comparative example 5 (C5):

A fat phase was made by mixing at about 65 C maize oil (20%), hardstock (pK39, 5%), butter (3.9%), saturated monoglyceride (0.95%), unsaturated monoglyceride (0.05%) and lecithin (0.1%). An aqueous phase comprising WPC (2% on total emulsion) and sugar (10% on total emulsion) was prepared and set at pH 4.8 with HCl. The fat phase (31%) and the aqueous phase (59%) were mixed at about 65 C and the mixture was homogenized at 75 and 50 kg/cm², and the emulsion was filled into bottles which were sealed and pasteurized for 10 minutes at 90° C.

### Comparative example 6 (C6):

The product was prepared as in example C5 except that homogenization was not carried out in the bottle but in line, with a mild UHT process (steam injection to 90 C and flashcooling). The mixture was homogenized followed by cooling in line and aseptically packaging to ensure the microbiological stability.

### Analysis are given in table VII

### Example VII

### VII.1

Creams were prepared from the formulations listed below, following the process procedure indicated in this specification.
The formulation was based on 20% vegetable fat of which 8% hardstock, 0.47% emsulifiers (PGE/DATA), WPC (4.5%), Egg Yolk (2%) granulated sugar (10%), thickeners (0.2%) and lactic acid to pH=4.2, balance to 100% water.
The process used was a mild UHT process (direct steam injection), pasteurisation to 90 °C, homogenisation at 150 bar, cooling to 5 °C, all in-line before aseptically packaging.

### VII.2

The formulation was based on vegetable fat 18% of which hardstock 9%, PGE/UMG/LEC (0.5%), WPC (4.5%), sugar (11%), thickeners (0.2%), yoghurt powder (3%), pH adjusted with lactic acid to pH=4.1, balance to 100% water. Products were made via mild UHT processing as described before.

### Analysis:

As a stability test, where a non-stable product is found and two phases (two layers) are formed, the distance from the bottom to the transition to the other phase is used as an indicator for emulsion stability. The data were measured 2 days after production. The higher the figure, the less stable the emulsion is.

**TABLE VII**

| Ex. | separation (mm) | Visc (mPas) | Whip time (min) | SV | Stevens value, 5°C, (g) (t=0hr) | Stevens value at 5 °C, (g) (t=16hr) |
|---|---|---|---|---|---|---|
| C1 | 10 | 40 | 5 | 4.6 | 11 | 12 |
| C2 | 3 | <20 | 5 | 5.3 | 11 | 10 |
| C3 | 30 | 280 | 5 | 5.1 | 9 | 9 |
| C4 | 5 | <20 | 5 | 5.8 | 10 | 9 |
| C5 | 10 | 460 | 5 | 2.6 | 9 | 13 |
| C6 | 1 | 180 | 5 | 3.7 | 9 | 13 |
| VII.1 | 0 | 160 | 5 | 3.0 | 22 | 44 |
| VII.2 | 0 | 180 | 5 | 2.8 | 23 | 120 |

The comparative products were found to be instable. There was significant separation of the emulsion noticed after 1 day of preparation. Furthermore, these products were found to be not suitable for application in products requiring a firm texture after whipping such as for mousses and bavarois. All products from comparative example C1 - C6 have a Stevens value at 5 °C after 3 and 24 hours after whipping of less than 20 g as measured according to the procedure mentioned before. In summary the creams resulting from the comparative examples did not have a good shelf life as they were not stable against phase separation. Furthermore these products did not show a firm structure after whipping.
Products VII.1 and VII.2, which are according to the invention had good shelf life and did show a firm structure after whipping.

## Claims

1. Whey protein based alternative cream having a fat level in the range of 0-35%, characterised in that the cream is pourable, is stable at a pH in the range of 3.5 to 4.5, heat stable, and has a good shelf life stability.

2. Cream according to claim 1 which is microbiologically stable and/or physically stable for at least 2 weeks, preferably at least 6 weeks, more preferably for at least 9 weeks.

3. Cream according to any one of claims 1-2 which is substantially free of any protein that can flocculate upon storage, upon heating to 60 °C or more and/or upon application in an environment having a pH in the range of 3.5-4.5.

4. Cream according to any one of claim 1-3, wherein the cream has a pH of more than 6.

5. Cream according to any one of claims 1-4, wherein the cream has a pH in the range of 3-5.5.

6. Cream according to any one of claims 1-5, wherein the cream contains 1.5-8 wt%, preferably 2-5 wt% whey protein (calculated as dry matter).

7. Cream according to any one of claims 1-6, wherein the cream contains fat at a level between 0 and 30%, and comprises at least one emulsifier.

8. Cream according to claim 7, wherein the cream contains at least one emulsifier selected from the group of emulsifiers consisting of emulsifiers based on lactic esters, unsaturated monoglycerides, saturated monoglycerides, glycerol esters, emulsifiers based on DATA esters, and/or on lecithin, Tween™ (which is a polyoxyethylene sorbitan ester), polyglycerol ester, lactic esters of mono-diglyceride, unsaturated diglycerides, distilled mono-diglyceride, saturated mono-diglyceride, egg ingredients (e.g. egg-yolk), or mixtures thereof.

9. Cream according to any one of claims 1-8 characterised in that the cream is whippable and retains its firmness upon storage for 16 hours at 5 °C, shown by a Stevens value at 5 °C of at least 20g after 16 hours.

10. Cream according to any one of claims 1-9 which is substantially free of anionic polysaccharides.

11. Process to prepare a cream according to any one of claims 1-10, characterised in that the product is pasteurized in line, cooled in line and then aseptically packed.

12. Use of a cream according to any one of claims 1-11, for the addition to edible food products having a pH in the range of 3-5.5.
